# EUROPEAN PATENT APPLICATION

(11) **EP 4 033 623 A1**
(43) Date of publication of application: **27.07.2022**
(21) Application number: 20866888.9
(22) Date of filing: 07.09.2020
(51) Int. Cl.: H02H 9/04

(54) **SURGE ABSORPTION CIRCUIT FOR SINGLE-PHASE AIR CONDITIONING SYSTEM**

(30) Priority: 17.09.2019 CN 201910877045
(71) Applicant: Qingdao Haier Air-Conditioning Electronic Co., Ltd, Qingdao, Shandong 266101 (CN)
(72) Inventor: CONG, Anping, Qingdao, Shandong 266101 (CN); SHAO, Haizhu, Qingdao, Shandong 266101 (CN); GENG, Yan, Qingdao, Shandong 266101 (CN); SHI, Bin, Qingdao, Shandong 266101 (CN); ZHANG, Bo, Qingdao, Shandong 266101 (CN); HU, Xianghui, Qingdao, Shandong 266101 (CN); JIA, Xinxu, Qingdao, Shandong 266101 (CN); FENG, Zhengyang, Qingdao, Shandong 266101 (CN)
(74) Representative: Brand Murray Fuller LLP
(86) International application number: PCT/CN2020/113717
(87) International publication number: WO 2021/052205

(57) **Abstract**

A surge absorption circuit for a single-phase air conditioning system, comprising: an L line and an N line, wherein one end (ACL, ACN) of each of the two is connected to a power source, and the other end (ACL', ACN') of each is connected to one pin of a rectifier bridge; a common mode inductor, which comprises a magnetic ring (R), and first and second common mode coils (L1, N1) that are connected in series in the L line and the N line respectively; a first surge absorption unit, which is connected to the side of the common mode inductor close to the power source and which comprises first and second varistors (ZNR1, ZNR2) and a first discharge tube (DSA1), wherein one end of each of the first and second varistors (ZNR1, ZNR2) is connected to the L line and the N line respectively, and the other end of each is connected to each other and grounded by means of the first discharge tube (DSA1); and a second surge absorption unit, which is connected to the side of the common mode inductor close to the power source and which comprises a second discharge tube (DSA2) and a third varistor (ZNR3), wherein the two are connected in series between the L line and the N line. The surge absorption circuit may improve the ability of an air conditioning circuit to absorb and withstand a surge voltage of several thousand volts.

## Description

### FIELD

The present disclosure relates to the circuit structure of a single-phase air conditioning system, and in particular to a surge absorbing circuit for a single-phase air conditioning system.

### BACKGROUND

A circuit of an air conditioning system, especially the circuit of a single-phase air conditioning system, needs to have the ability to prevent lightning strikes and withstand voltage spikes and surges of a power grid. An instantaneous voltage at the time of lightning strikes and voltage spikes and surges of the power grid may be as high as several thousand volts. Therefore, when a surge simulation is performed on the circuit of the air conditioning system, a high voltage of 6000V is usually used for testing, which often leads to damage to a rectifier bridge or a discharge tube, thus causing failure of the test.

Accordingly, there is a need for a new surge absorbing circuit for a single-phase air conditioning system in the art to solve the above problem.

### SUMMARY

In order to solve the above problem in the prior art, that is, to solve the problem that the existing surge absorbing circuits for a single-phase air conditioning system cannot effectively withstand a high-voltage surge of several thousand volts, the present disclosure provides a surge absorbing circuit for a single-phase air conditioning system, in which the surge absorbing circuit includes: an L-line, a first end of which is connected to a power source, and a second end of which is connected to a pin of a rectifier bridge of the single-phase air conditioning system; a N-line, a first end of which is connected to the power source, and a second end of which is connected to another pin of the rectifier bridge of the single-phase air conditioning system; a common mode inductor, which includes a magnetic ring, and a first common mode coil and a second common mode coil both wound around the magnetic ring, the first common mode coil being connected in series in the L-line, and the second common mode coil being connected in series in the N-line; and a first surge absorbing unit, which is connected to a side of the common mode inductor that is close to the power source and which includes a first piezo-resistor, a second piezo-resistor and a first discharge tube, one end of the first piezo-resistor and one end of the second piezo-resistor being connected to the L-line and the N-line respectively, and the other ends of the first piezo-resistor and the second piezo-resistor being connected to each other and being connected to the ground through the first discharge tube; in which the surge absorbing circuit further includes a second surge absorbing unit, which is connected to the side of the common mode inductor that is close to the power source and which includes a second discharge tube and a third piezo-resistor, the second discharge tube and the third piezo-resistor being connected in series between the L-line and the N-line.

In a preferred embodiment of the above surge absorbing circuit for the single-phase air conditioning system, the surge absorbing circuit further includes an inductor protection unit, in which the inductor protection unit includes a third discharge tube and a fourth discharge tube, the third discharge tube and the first common mode coil are connected in parallel in the L-line, and the fourth discharge tube and the second common mode coil are connected in parallel in the N-line.

In a preferred embodiment of the above surge absorbing circuit for the single-phase air conditioning system, at least one of the first piezo-resistor, the second piezo-resistor and the third piezo-resistor is a 14D471 type piezo-resistor.

In a preferred embodiment of the above surge absorbing circuit for the single-phase air conditioning system, at least one of the first discharge tube and the second discharge tube is a ceramic discharge tube.

In a preferred embodiment of the above surge absorbing circuit for the single-phase air conditioning system, the surge absorbing circuit further includes at least one common mode noise absorbing unit, each of which includes two Y capacitors, one ends of the two Y capacitors are respectively connected to the L-line and the N-line, and the other ends of the two Y capacitors are connected to each other and grounded.

In a preferred embodiment of the above surge absorbing circuit for the single-phase air conditioning system, the surge absorbing circuit includes two common mode noise absorbing units, one of the common mode noise absorbing units is connected to the side of the common mode inductor that is close to the power source, and the other one of the common mode noise absorbing units is connected to a side of the common mode inductor that is close to the rectifier bridge.

In a preferred embodiment of the above surge absorbing circuit for the single-phase air conditioning system, the surge absorbing circuit further includes at least one differential mode noise absorbing unit, each of which includes one X capacitor and one resistor, and the X capacitor and the resistor are connected in parallel with each other between the L-line and the N-line.

In a preferred embodiment of the above surge absorbing circuit for the single-phase air conditioning system, the surge absorbing circuit includes two differential mode noise absorbing units, one of the differential mode noise absorbing units is connected to the side of the common mode inductor that is close to the power source, and the other one of the common mode noise absorbing units is connected to a side of the common mode inductor that is close to the rectifier bridge.

In a preferred embodiment of the above surge absorbing circuit for the single-phase air conditioning system, the surge absorbing circuit further includes a fuse unit, the fuse unit includes two fuses, and the two fuses are connected in series in the L-line in parallel with each other.

In addition, the present disclosure also provides a single-phase air conditioning system, which includes the surge absorbing circuit according to any one of the above solutions.

It can be understood by those skilled in the art that by connecting the second discharge tube and the third piezo-resistor in series with each other and then connecting them between the L-line and the N-line, the surge absorbing circuit of the present disclosure can make full use of respective advantages of voltage stabilizing and voltage limiting of the piezo-resistor and the discharge tube, which greatly improves the ability of the air conditioning circuit to absorb and withstand a surge voltage of several thousand volts. Either in actual use or in the surge test, the surge absorbing circuit has exhibited a particularly stable performance. In particular, in the case of adopting the above circuit structure, the circuit of the present disclosure withstands a repeated impact of a 6000V high voltage in the surge test, and there is no problem of damage to the rectifier bridge or the discharge tube.

In addition, a 14D471 type piezo-resistor is used as the piezo-resistor of the present disclosure. As compared with other models, this type of piezo-resistor has a better surge absorbing ability, so it is more suitable for use in the surge absorbing circuit of the present disclosure. Furthermore, a ceramic discharge tube is used as the discharge tube of the present disclosure. As compared with other types of discharge tubes, the ceramic discharge tube can significantly enhance the surge absorbing ability of the L-line and the N-line to the ground and to each other, so it is more suitable for use in the surge absorbing circuit of the present disclosure.

Further, by arranging two discharge tubes connected in parallel with the first common mode coil and the second common mode coil respectively, the present disclosure can further prevent residual high voltage's impact on the coil of the inductor on the basis of sufficiently suppressing the surge voltage, so as to maximally avoid damage to important elements and components in the circuit.

### BRIEF DESCRIPTION OF DRAWINGS

Preferred embodiments of the present disclosure will be described below with reference to the accompanying drawings, in which:

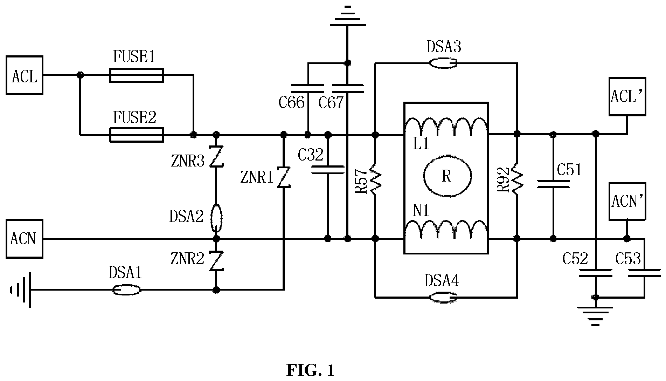

FIG. 1 is a structural diagram of a surge absorbing circuit for a single-phase air conditioning system according to the present disclosure.

### DETAILED DESCRIPTION

Preferred embodiments of the present disclosure will be described below with reference to the accompanying drawings. It should be understood by those skilled in the art that these embodiments are only used to explain the technical principles of the present disclosure, and are not intended to limit the scope of protection of the present disclosure. For example, although the preferred embodiments of the present disclosure are described in conjunction with a 6000V surge test herein, this is not limiting. The technical solution of the present disclosure can obviously be used either as a test circuit or as a circuit in actual in use. Such changes do not deviate from the basic principle of the present disclosure and will therefore fall within the scope of protection of the present disclosure.

It should be noted that in the description of the present disclosure, directional or positional relationships indicated by terms such as "upper", "lower", "left" and "right" are based on the directional or positional relationships shown in the drawings. They are merely used for the convenience of description, and do not indicate or imply that the device or element involved must have a specific orientation, or be configured or operated in a specific orientation, and therefore they should not be construed as limiting the present disclosure. In addition, ordinal numbers such as terms "first" and "second" are only used for distinguishing several technical features of the same property, and should not be construed as indicating or implying relative importance.

In addition, it should also be noted that in the description of the present disclosure, unless otherwise clearly specified and defined, terms "connect" and "connection" should be understood in a broad sense; for example, the connection may be a fixed connection, or may also be a detachable connection, or an integral connection; it may be a mechanical connection, or an electrical connection; it may be a direct connection, or an indirect connection implemented through an intermediate medium, or it may be an internal communication between two elements. For those skilled in the art, the specific meaning of the above terms in the present disclosure can be understood according to specific situations.

Reference is first made to FIG. 1, which is a structural diagram of a surge absorbing circuit for a single-phase air conditioning system according to the present disclosure. As shown in FIG. 1, the surge absorbing circuit includes: an L-line, namely, a phase line of the single-phase air conditioning system, in which a first end ACL of the L-line is connected to a power source (not shown in the figure), and a second end ACL' of the L-line is connected to a pin of a rectifier bridge (not shown in the figure) of the single-phase air conditioning system; a N-line, namely, a ground line of the single-phase air conditioning system, in which a first end ACN of the N-line is connected to the power source (not shown in the figure), and a second end ACN' of the N-line is connected to the other pin of the rectifier bridge (not shown in the figure) of the single-phase air conditioning system; a common mode inductor, which includes a magnetic ring R, and a first common mode coil L1 and a second common mode coil N1 both wound around the magnetic ring R, in which the first common mode coil L1 is connected in series in the L-line, and the second common mode coil N1 is connected in series in the N-line; a first surge absorbing unit, which is connected to a side of the common mode inductor that is close to the power source (the left side in FIG. 1) and which includes a first piezo-resistor ZNR1, a second piezo-resistor ZNR2 and a first discharge tube DSA1, in which one end of the first piezo-resistor ZNR1 and one end of the second piezo-resistor ZNR2 are respectively connected to the L-line and the N-line, and the other ends of the first piezo-resistor ZNR1 and the second piezo-resistor ZNR2 are connected to each other and connected to the ground through the first discharge tube DSA1.

Different from the prior art, the surge absorbing circuit of the present disclosure further includes a second surge absorbing unit. The second surge absorbing unit is connected to the side of the common mode inductor that is close to the power source (the left side in FIG. 1) and includes a second discharge tube DSA2 and a third piezo-resistor ZNR3. The second discharge tube DSA2 and the third piezo-resistor ZNR3 are connected in series with each other and then connected between the L-line and the N-line. According to the inventor's repeated tests and experiments, it is found that when the second discharge tube DSA2 and the third piezo-resistor ZNR3 are connected in series with each other and then connected between the L-line and the N-line, the surge absorbing circuit of the present disclosure can make full use of respective advantages of voltage stabilizing and voltage limiting of the piezo-resistor and the discharge tube, which greatly improves the ability of the air conditioning circuit to absorb and withstand a surge voltage of several thousand volts. Either in actual use or in the surge test, the surge absorbing circuit has exhibited a particularly stable performance. In particular, in the case of adopting the above circuit structure, the circuit of the present disclosure withstands a repeated impact of a 6000V high voltage in the surge test, and there is no problem of damage to the rectifier bridge or the discharge tube.

In a specific embodiment, each of the first piezo-resistor ZNR1, the second piezo-resistor ZNR2 and the third piezo-resistor ZNR3 is a 14D471 type piezo-resistor. As compared with other models, this type of piezo-resistor has a better surge absorbing ability, so it is more suitable for use in the surge absorbing circuit of the present disclosure. Furthermore, each of the first discharge tube DSA1 and the second discharge tube DSA2 is a ceramic discharge tube. Similarly, as compared with other types of discharge tubes, the ceramic discharge tube can significantly enhance the surge absorbing ability of the L-line and the N-line to the ground and to each other, so it is more suitable for use in the surge absorbing circuit of the present disclosure. In this regard, it should be particularly noted that according to needs, those skilled in the art may also set one or several (but not all) of the above piezo-resistors to the above-mentioned model, or set one (but not all) of the above discharge tubes to the above-mentioned model, or set the above piezo-resistors or discharge tubes to other models suitable for use in the surge absorbing circuit. Such adjustments do not depart from the basic principle of the present disclosure, and therefore will fall within the scope of protection of the present disclosure.

With continued reference to FIG. 1, the surge absorbing circuit of the present disclosure further includes an inductor protection unit, which includes a third discharge tube DSA3 and a fourth discharge tube DSA4. The third discharge tube DSA3 and the first common mode coil L1 are connected in parallel in the L-line, and the fourth discharge tube DSA4 and the second common mode coil are connected in parallel in the N-line. With such an arrangement, the present disclosure can further prevent damage to the coil of the inductor caused by residual high voltage on the basis of sufficiently absorbing the surge voltage, so as to maximally avoid the high voltage's impact on important elements and components in the circuit.

With continued reference to FIG. 1, the surge absorbing circuit of the present disclosure further includes at least one common mode noise absorbing unit, each of which includes two Y capacitors, one ends of the two Y capacitors are respectively connected to the L-line and the N-line, and the other ends of the two Y capacitors are connected to each other and grounded. Specifically, as shown in FIG. 1, the surge absorbing circuit of the present disclosure includes two common mode noise absorbing units. One common mode noise absorbing unit is connected to the side of the common mode inductor that is close to the power source (the left side in FIG. 1) and includes a Y capacitor C66 and a Y capacitor C67. The other common mode noise absorbing unit is connected to a side of the common mode inductor that is close to the rectifier bridge (the right side shown in FIG. 1) and includes a Y Capacitor C52 and a Y capacitor C53.

With continued reference to FIG. 1, the surge absorbing circuit of the present disclosure further includes at least one differential mode noise absorbing unit, each of which includes one X capacitor and one resistor, and the X capacitor and the resistor are connected in parallel with each other between the L-line and the N-line. Specifically, as shown in FIG. 1, the surge absorbing circuit of the present disclosure includes two differential mode noise absorbing units. One differential mode noise absorbing unit is connected to the side of the common mode inductor that is close to the power source (the left side in FIG. 1) and includes an X capacitor C32 and a resistor R57. The other common mode noise absorbing unit is connected to the side of the common mode inductor that is close to the rectifier bridge (the right side shown in FIG. 1) and includes an X capacitor C51 and a resistor R92.

It can be known by those skilled in the art that both the X capacitor and the Y capacitor are safety capacitors, and they are capacitors used in such occasions; that is, after the capacitor fails, it will not cause electric shock and will not endanger personal safety. Specifically, the X capacitor is usually connected across the L-line and the N-line, and a metal thin-film capacitor is generally selected for it; the Y capacitors are capacitors connected across the L-line and the ground as well as across the N-line and the ground respectively. Due to the limitation of leakage current, the value of the Y capacitor cannot be too large. Generally, the X capacitor is of the order of uF, and the Y capacitor is of the order of nF. The X capacitor suppresses differential mode interference, and the Y capacitor suppresses common mode interference. In addition, in order to enhance the noise suppression effect, in the present disclosure, two Y capacitors are connected in parallel and then used in pair, and each X capacitor is equipped with a resistor connected across the L-line and the N-line to better suppress the common mode interference and the differential mode interference in an AC signal.

It should be noted that although the connection position of each noise suppression unit (on the left side or the right side of the inductor) has been described above, this is not limiting, and those skilled in the art may adjust such positions as needed, as long as the connection relationships of the noise suppression units with the L-line and the N-line do not change. In addition, although the differential mode noise absorbing unit has been described above as including an X capacitor and a resistor connected in parallel, this is not restrictive, and those skilled in the art may only set one X capacitor to absorb the differential mode interference. Furthermore, although the Y capacitors have been described above as being used in a pair of two, this is not limiting, and those skilled in the art may use only one Y capacitor to ground one power line as needed.

With continued reference to FIG. 1, the surge absorbing circuit of the present disclosure further includes a fuse unit, and the fuse unit includes two fuses FUSE1 and FUSE2 which are connected in series in the L-line in parallel with each other. It should be pointed out that the parallel connection of two identical fuses is only an example, those skilled in the art may also set one or more than two fuses as needed, and the multiple fuses may be of different models.

On the basis of the above surge absorbing circuits, the present disclosure also provides a single-phase air conditioning system, which includes the various surge absorbing circuits described above. Correspondingly, the technical effects that can be obtained by the single-phase air conditioning system are the same as those of the above surge absorbing circuits, which will not be repeated herein.

Finally, it should be noted that except for the piezo-resistors, the specifications and models of other circuit components are not defined in the above description. However, those skilled in the art can understand that the specific models and parameters of other circuit components, such as the X capacitor, the Y capacitors, the resistors, the fuses, the discharge tubes, may be reasonably selected by those skilled in the art according to the application or test scenes, especially according to the amplitude of possible surge voltage, and the present disclosure does not impose any restrictions on this.

Hitherto, the technical solutions of the present disclosure have been described in conjunction with the preferred embodiments shown in the accompanying drawings, but it is easily understood by those skilled in the art that the scope of protection of the present disclosure is obviously not limited to these specific embodiments. Without departing from the principles of the present disclosure, those skilled in the art can make equivalent changes or replacements to relevant technical features, and all the technical solutions after these changes or replacements will fall within the scope of protection of the present disclosure.

## Claims

1. A surge absorbing circuit for a single-phase air conditioning system, the surge absorbing circuit comprising:
an L-line, a first end of which is connected to a power source, and a second end of which is connected to a pin of a rectifier bridge of the single-phase air conditioning system;
a N-line, a first end of which is connected to the power source, and a second end of which is connected to another pin of the rectifier bridge of the single-phase air conditioning system;
a common mode inductor, which comprises a magnetic ring, and a first common mode coil and a second common mode coil both wound around the magnetic ring, the first common mode coil being connected in series in the L-line, and the second common mode coil being connected in series in the N-line; and
a first surge absorbing unit, which is connected to a side of the common mode inductor that is close to the power source and which comprises a first piezo-resistor, a second piezo-resistor and a first discharge tube, one end of the first piezo-resistor and one end of the second piezo-resistor being connected to the L-line and the N-line respectively, and the other ends of the first piezo-resistor and the second piezo-resistor being connected to each other and being connected to the ground through the first discharge tube;
wherein the surge absorbing circuit further comprises a second surge absorbing unit, which is connected to the side of the common mode inductor that is close to the power source and which comprises a second discharge tube and a third piezo-resistor, the second discharge tube and the third piezo-resistor being connected in series between the L-line and the N-line.

2. The surge absorbing circuit for the single-phase air conditioning system according to claim 1, wherein the surge absorbing circuit further comprises an inductor protection unit, the inductor protection unit comprises a third discharge tube and a fourth discharge tube, the third discharge tube and the first common mode coil are connected in parallel in the L-line, and the fourth discharge tube and the second common mode coil are connected in parallel in the N-line.

3. The surge absorbing circuit for the single-phase air conditioning system according to claim 1, wherein at least one of the first piezo-resistor, the second piezo-resistor and the third piezo-resistor is a 14D471 type piezo-resistor.

4. The surge absorbing circuit for the single-phase air conditioning system according to claim 1, wherein at least one of the first discharge tube and the second discharge tube is a ceramic discharge tube.

5. The surge absorbing circuit for the single-phase air conditioning system according to any one of claims 1 to 4, wherein the surge absorbing circuit further comprises at least one common mode noise absorbing unit, each of which comprises two Y capacitors, one ends of the two Y capacitors are respectively connected to the L-line and the N-line, and the other ends of the two Y capacitors are connected to each other and grounded.

6. The surge absorbing circuit for the single-phase air conditioning system according to claim 5, wherein the surge absorbing circuit comprises two common mode noise absorbing units, one of the common mode noise absorbing units is connected to the side of the common mode inductor that is close to the power source, and the other one of the common mode noise absorbing units is connected to a side of the common mode inductor that is close to the rectifier bridge.

7. The surge absorbing circuit for the single-phase air conditioning system according to any one of claims 1 to 4, wherein the surge absorbing circuit further comprises at least one differential mode noise absorbing unit, each of which comprises one X capacitor and one resistor, and the X capacitor and the resistor are connected in parallel with each other between the L-line and the N-line.

8. The surge absorbing circuit for the single-phase air conditioning system according to claim 7, wherein the surge absorbing circuit comprises two differential mode noise absorbing units, one of the differential mode noise absorbing units is connected to the side of the common mode inductor that is close to the power source, and the other one of the common mode noise absorbing units is connected to a side of the common mode inductor that is close to the rectifier bridge.

9. The surge absorbing circuit for the single-phase air conditioning system according to any one of claims 1 to 4, wherein the surge absorbing circuit further comprises a fuse unit, the fuse unit comprises two fuses, and the two fuses are connected in series in the L-line in parallel with each other.

10. A single-phase air conditioning system, comprising the surge absorbing circuit according to any one of claims 1 to 9.
